# EUROPEAN PATENT APPLICATION

(11) **EP 2 261 181 A1**
(43) Date of publication of application: **15.12.2010**
(21) Application number: 09160866.1
(22) Date of filing: 21.05.2009
(51) Int. Cl.: C03B 37/012, C03B 37/027

(54) **Method for fabricating and processing a preform, preform and optical fiber**

(71) Applicant: Silitec Fibers SA, 2017 Boudry (CH)
(72) Inventor: Sandoz, Frédéric, CH-2016, Cortaillod (CH); Pedrido, Carlos, CH-2017, Boudry (CH); Hamel, Philippe, CH-2024, St-Aubin-Sauges (CH); Ribaux, Philippe, CH-2022, Bevaix (CH); Giraud, Alain, CH-1028, Preverenges (CH)
(74) Representative: Rutz & Partner

(57) **Abstract**

The inventive method relates to manufacturing a secondary preform (9) that is used for drawing an optical fiber (90) having a core and a cladding with different refractive indices. The method comprises the steps of
- holding an outermost tube (0) with a closed lower end (09);
- inserting at least an innermost tube (1) coaxially aligned into the outermost tube (0);
- selecting at least one sort of intermediate glass particles (100) and one sort of innermost glass particles (101) according to the profile determined for the secondary preform (9) or the optical fiber (90);
- filling the annular space (01) between the neighbouring tubes (0, 1) with the intermediate glass particles (100);
- filling the innermost tube (1) that is empty or comprises a solid preform (10) with the innermost glass particles (101);
- performing a final thermal process including thermally processing at least the innermost glass particles (101), the intermediate glass particles (100) and the outermost tube (0) in order to obtain a fused secondary preform (9).

## Description

The present invention relates to a method for fabricating and processing a secondary or higher order preform, to such a preform and an optical fiber drawn therefrom.

Fabrication of optical fibers, such as the fibers currently used in ultra high speed data communication networks, is described in [1], Mool C. Gupta, Handbook of PHOTONICS, CRC Press, 1997 Boca Raton, chapter 10.7, pages 445-450. Main process steps of optical fiber fabrication are, fabricating a preform, drawing the fiber from the preform and coating the fiber with a material that protects the fiber from handling and from environmental influences.

In the drawing process, the preform is fed from above into the drawing portion of a furnace while being drawn from the bottom using tractors. The fiber is then wound onto a drum while being monitored for tensile strength. The temperature during draw is typically in the range of 2000°C. After exiting the furnace the fiber is coated with a UV-curable coating before winding on the drum.

According to [1], there are basically three methods to form a preform or blank. The modified chemical vapor deposition process (MCVD), the outside vapour deposition process (OVD) and the vapour-axial deposition process (VAD).

In [2], US 2007/214841 A1, which is herewith incorporated by reference, a further method for fabricating and processing a preform is described. According to this method a primary preform is inserted into a silica tube. The free space remaining in the silica tube is then filled with silica grain. Next, a condition of reduced pressure is generated within the interior space of the silica tube that is closed, e.g. with adjoiner that holds the primary preform and the silica tube in alignment. Then the assembled unprocessed secondary preform, i.e. the silica tube with the primary preform and the silica grain, is treated with a temperature in the range of 2100 °C to 2250 °C. As a result, the silica grain gets molten and fused to the primary preform, thus forming an overcladding layer on the primary preform. During this process stage, an optical fiber can simultaneously be drawn from the resulting secondary preform. Alternatively the secondary preform can completely be processed, cooled and forwarded to a further site, where the drawing process is performed. The described method advantageously allows fabricating preforms that are designed for drawing conventional fibers or Photonic Crystal Fibers.

Hence, this method allows manufacturing preforms at lower cost.

While cost plays a significant role in the manufacturing of optical fibers, it would be desirable to further optimise the functionalities of the fibers. However, in this respect known technologies and manufacturing processes are strongly limited not allowing implementation of new features or involving exorbitant efforts for realising such features.

For example, according to [1], page 450, an important aspect of optical fiber research is rare-earth (RE) doping for amplification. E.g., an RE-doped fiber with lengths in the order of meters and dopant levels in the order of 2 ppm, may be spliced to a wavelength-dependent, fiber-optic coupler. The coupler then allows pumping the erbium-doped fiber with light emitted from a high-power semiconductor laser diode at 980 or 1480 nm. The pump light is used to excite ions from the ground state to an excited state. Signal light entering the fiber initiates stimulated emission and is coherently amplified. It is also know to apply laser radiation through the cladding, which however requires additional efforts.

In [3], US2004156401A1, multi-clad optical fiber is described, that comprises a rare-earth-doped active core, a pump core surrounding said active core; a glass inner cladding layer, surrounding said pump core; and a protective coating, surrounding said additional glass cladding layer, with the refractive index stepwise decreasing from the inner towards the outer layers.

In [4], WO2008068331A1, which herewith is incorporated by reference, it has been proposed to insert tubes into the cladding region that is made of silica grain, thus reducing the refractive index in the core region. A rather precise adjustment of the profile of the refractive index for the preforms and the optical fiber drawn requires however considerable efforts.

It would therefore be desirable to provide an improved method for fabricating preforms and optical fibers such as Photonic Crystal Fibers, as well as providing improved preforms and optical fibers.

It would be desirable in particular to provide a method that allows fabricating a secondary or higher order preform at reduced cost with a desirable profile of the properties of the preform and the optical fibers derived therefrom.

Further, it would be desirable to provide a method for fabricating laser active optical fibers that efficiently allow laser pumping through the cladding.

Further, it would be desirable to provide a method for fabricating optical fibers that have an extended transmission range and/or that have a reduced attenuation, particularly if bent in curves with a small radius

Still further, it would be desirable to provide a method that allows manufacturing optical fibers with desired properties that can later be identified by the user.

### SUMMARY OF THE INVENTION

The above and other objects of the present invention are achieved by a method according to claim 1, a preform according to claim 15 and an optical fiber according to claim 16.

The inventive method relates to manufacturing a secondary preform that is used for drawing an optical fiber having a core and a cladding with different refractive indices. The method comprises the steps of
- holding an outermost tube with a closed lower end;
- inserting at least an innermost tube with an open or closed lower end coaxially aligned into the outermost tube;
- selecting at least two sorts of glass particles according to the profile determined for the secondary preform or the optical fiber;
- filling the annular space between the neighbouring tubes with the intermediate glass particles;
- filling the innermost tube that is empty or comprises a solid preform with the innermost glass particles;
- performing a final thermal process including thermally processing at least the innermost glass particles, the intermediate glass particles and the outermost tube in order to obtain a fused secondary preform.

The term "secondary preform" relates a preform that comprises a core and at least one cladding layer and that is used for drawing an optical fiber or for further processes, in which additional cladding layers are applied.

In a preferred embodiment at least one intermediate tube is inserted and coaxially aligned between the outermost tube and the innermost tube. Then each one of the annular spaces resulting between two neighbouring tubes are filled with a sort of intermediate glass particles that is individually selected according to the desired profile of the secondary preform or optical fiber.

The inventive method therefore allows manufacturing preforms with a core and cladding layers that are made of two or more sorts of glass particles. Hence, the manufacturer can select different sorts of glass particles with desired properties, thus creating preforms and optical fibers with a core and at least one cladding layer providing better performance or additional functionalities.

Enclosing glass particles in separate compartments of a preform allows the use of different materials that would be incompatible in other manufacturing processes. In particular, the inventive method allows using materials with highly differing coefficients of thermal expansion. The innermost glass particles can consist or be made from elements like silica, sapphire (Al2O3), crystal, fluoride glasses (e.g.: ZBLAN or CaF2), chalcogenides (e.g.. Germanium Arsenic Sulphide; Selenide or Telluride) for example.

While fused silica (SiO2) has a near zero thermal expansion, sapphire, calcium fluorides and chalcogenides have comparably high coefficients of thermal expansion (Al2O3: 8.4 * 10⁻⁶/K; CaF2: 18.85 * 10⁻⁶/K; chalcogenides: typically 13-34 * 10⁻⁶/K). Hence, the application of these materials is in many applications extremely difficult or impossible.

With the inventive method, these materials can advantageously be applied, thus obtaining optical fibers with a broader transmission range starting from a wavelength of 170nm up to approx. 5000nm for sapphire and up to approx. 7800nm for calcium fluoride compared to a comparably small transmission range of fused silica of 185nm to approx. 2100nm.

In view of the large differences between the coefficients of thermal expansion it is recommended in a further embodiment to allocate an adaptation layer between the core; e.g. a core made of sapphire, fluoride glasses, or chalcogenides; and a cladding layer made of fused silica. Such an adaptation layer would be made of glass particles with a coefficient of thermal expansion that would lie between on the one hand the coefficient of sapphire, fluoride glass, or chalcogenides and on the other hand the coefficient of silica. This material, e.g. Borosilicate powder or grain, would be located within a relatively small annular space reserved between the innermost tube and the first intermediate tube. More preferably the innermost tube could be made of material such as Borosilicate having an intermediate coefficient of thermal expansion. This innermost Borosilicate-tube would be left within the preform so that a thin adaptation layer would be created between the innermost glass particles and the glass particles in the adjacent intermediate glass particles.

Further, the inventive method can be used for manufacturing optical fibers with other preferred properties. It is possible to use innermost glass particles having a high index of refraction in order to create the core of the secondary preform. The intermediate glass particles that are inserted into the annular space between the innermost glass tube and the adjacent intermediate tube or the outermost tube, if only two tubes are present, preferably comprise a very low refractive index, leading to single mode optical fibers having a comparably low attenuation when being bent in narrow curves. Hence, optical fibers of this kind are preferably used close to the installation site, where curves often occur. In order to create adjacent to the core a first step in the profile the innermost tube is selected with a corresponding refractive index and is left remaining within the preform. Hence, optical signals will be confinement within the core due to the reflection that these first cladding layer. In the event that the optical fiber is bent, then optical signals that escape into this first cladding layer will be reflected at the second cladding layer, which is formed by the first intermediate glass particles 102 or 100 that comprise a significantly reduced refractive index. Significantly means in this respect, that the difference of the refractive indices, i.e. the established delta, leads to a total refraction at he boundary of the related media.

Hence, the inventive method allows manufacturing simply structured optical fibers having advantageous properties.

Further, inventive the method not only allows the use and combination of new materials. They inventive method allows realising complex architectures of preforms and optical fibers having profiles which could not be realised up to now.

In a further preferred embodiment the inventive method is used for creating a secondary preform with a stepped cladding profile by using different sorts of glass particles, that are inserted into annular spaces that are delimited by the innermost glass tube and, if present, at least one intermediate glass tube, and the innermost tube, and, if present, a solid primary or secondary preform that has been inserted into the innermost tube. In the event that a preform such as a glass blank has been inserted into the innermost tube, then the innermost glass particles will typically form a cladding layer contributing to the stepped profile of the cladding.

In preferred embodiments, glass particles are selected and assigned to the individual annular spaces in such a way
a) that two cladding layers with a comparably high refractive index are separated by a cladding layer with a comparably low refractive index or
b) that one cladding layer with a lower refractive index is embedded between the core and an outer layer with a higher refractive index.

In order to obtain a cladding layer with a low refractive index, intermediate glass particles are selected that comprise a lower density and/or that are doped accordingly, preferably with fluorine. Again, a delta is aimed for, which ensures total reflection even in bent optical fibers.

Profiles with stepped cladding layers can advantageously be used with a silica core or with cores consisting of Al20O3 or CaF2. The different embodiments disclosed during, can therefore be combined accordingly.

As described above, the inventive method allows manufacturing preforms and optical fibers with complex profiles that are uniform over the whole length of the preform and over all sectors of a cross-section.

However, the inventive method allows creating even more complex profiles that change longitudinally along the preform as well as within specific sectors of the cross-section of the resulting optical fiber.

In a further preferred embodiment at least one of the annular spaces between neighbouring tubes and/or the interior space of the innermost tube is partitioned longitudinally or sectorally into separate sub-spaces that are filled with specific sorts of glass particles that are selected according to the desired profile of the secondary preform or optical fiber.

In order to partition the sub-spaces sectorally at least one separation element is inserted, preferably radially, into the annular space. In order to partition the sub-spaces longitudinally at least one separation element, such as a circle ring, may horizontally be inserted. Alternatively the sorts of glass particles may be altered as desired at defined fill levels. In order to obtain an even distribution of the glass particles a vibration may be applied to the tubes while the glass particles are filled into the preform.

Hence, the profile of the preform may change sectorally and longitudinally as desired. This feature is of particular benefit in laser active optical fibers that are pumped with laser radiation in order to amplify the signals propagating within the core of the fiber. Specific sectors of the preform and of the optical fiber can be designed in such a way that laser radiation can enter with high-efficiency the core of the optical fiber, which is doped with laser active materials, through the cladding. The glass particles in such a sector may be selected in such a way that a rather flat sectoral profile results, with reduced differences of the refractive indices of the applied materials. In order to avoid at the same time the escape of optical signals propagating in the optical fiber, the sector is selected with an angle that allows the transfer of radiation only towards the core.

In the event that a preform with a longitudinally changing profile is created, then it may be of interest for the user to know, when purchasing the optical fiber or during maintenance work, what profile is present at the specific section of the optical fiber. This problem is solved by inserting adjacent to the outermost tube outermost glass particles that contain a marker, such as metal particles or coloured particles. When drawing the optical fiber, the properties of the optical fiber may be detected for example by the diameter monitor, which is typically present at the manufacturing site. After having detected the properties of the optical fiber a coating applicator is controlled accordingly, applying a coating that corresponds, e.g. in colour, to the detected properties.

In the event that comparably thin glass tubes were inserted into the outermost glass tube, then the innermost glass particles and the intermediate glass particles are preferably inserted simultaneously. Further, when filling the glass particles, simultaneously or sequentially, a preliminary thermal process is preferably applied with an intermediate process temperature that is lower than the melting point of the innermost glass particles and the intermediate glass particles. With these measures, at least one of the following effects is achieved. The silica grain is evenly accommodated within the interior space of the silica tube. Punctual tensions that could cause a rupture of the silica tube during later process stages are thus avoided.

Hence, the user may select silica tubes with thinner walls, thus achieving a higher average quality of the preform. Less costly material with lower quality, resulting from the silica tube, can be removed from the preform, if desired, with reduced effort.

Preferably the intermediate temperature is selected in such a way that the thermal treatment causes the glass particles to change from a first state to a second state, in which the glass particles take on a lower material density, i.e. a larger volume. For this purpose the intermediate process temperature is preferably selected in the range between approximately 576°C and 1470°C.

In the event that the glass particles consist of trigonal α-Quartz having a material density of approx. 2,65 g/cm3, then preferably the intermediate process temperature is selected between 576°C and 870°C so that α-Quartz is transformed into hexagonal β-Quartz having a material density of approx. 2,53 g/cm3.

In the event that the glass particles consist of α-Quartz or β-Quartz, then preferably the intermediate process temperature is selected between 870°C and 1470°C so that α-Quartz or β-Quartz is transformed into hexagonal β-Tridymite having a material density of approx. 2,25 g/cm3.

Still further, an intermediate process temperature above 1470°C can be applied to transform glass particles with an initial configuration of α-Quartz, β-Quartz or β-Tridymite into β-Cristobalite having a material density of approx. 2,20 g/cm3. The inventive method further allows assembling preforms used for manufacturing Photonic Crystal Fibers, which are described in [5], WO2005102947A1.

Compared to traditional fibres, Photonic Crystal Fibres comprise a complex structure. Photonic Crystal Fibres typically have a core region extending along the longitudinal direction, a cladding region extending along the longitudinal direction, said cladding region comprising an at least substantially two-dimensionally periodic structure comprising primary, elongated elements each having a centre axis extending in the longitudinal direction of the waveguide. Further, the primary elements have a refractive index being lower than a refractive index of any material adjacent to the elongated elements.

The inventive method allows creating preforms for Photonic Crystal Fibres in different ways. The innermost tube can be used for manufacturing the core only. In this embodiment, auxiliary tubes are inserted into the at least one annular space between the innermost tube and the outermost tube in a periodic structure. The auxiliary tubes will then form the elongated elements of the structure of the preform and Photonic Crystal Fiber. The auxiliary tubes can be glass tubes or solid carbon rods that are removed after the surrounding glass particles have been molten.

Alternatively, a solid preform can be placed within the innermost tube forming the core of the Photonic Crystal Fiber. In addition the auxiliary tubes are placed as well within the innermost tube, which then is filled with innermost glass particles. As described above, the space between the innermost tube and the outermost tube is filled with outermost glass particles. If desired, intermediate tubes can be applied as a well in order to create further layers.

After the filling procedures have been terminated the innermost tube and/or at least one of the intermediate tubes can be removed. Removal of the innermost tube or an intermediate tube leaves the neighbouring glass particles in contact without any disturbing element in between. Removable tubes may be made of any suitable material such as plastic, carbon or metal allowing easy and failsafe assembly of the structure of the preform, filling of the different sorts of glass particles as well as extraction of the removable tubes. However, as stated above glass tubes can also be provided with desired properties and may be left in the preform.

In order to facilitate the removal of the concerned tubes a vibration, such as a subsonic vibration, is preferably applied.

As stated above, various glass particles, such as Silica, Borosilicate, Sapphire, Crystal, Fluoride glasses, Chalcogenides, can be applied. However, the inventive method is not limited to these materials. Further, tubes made of these materials can advantageously be used. The size of the glass particles may be in the submicron range and may reach up to dozens of microns. In the event that active optical fibers are manufactured, then the innermost glass particles are doped with rare earth elements allowing attenuation or amplification of optical signals.

### BRIEF DESCRIPTION OF THE DRAWINGS

Some of the objects and advantages of the present invention have been stated, others will appear when the following description is considered together with the accompanying drawings, in which:
- Fig. 1: shows the insertion of an innermost tube 1 having an interior space 11 into an outermost tube 0 having a primary axis x, an interior space 01 and a conical closure 09 at its lower end;
- Fig. 2: shows the tube 11 of figure 1 placed coaxially aligned in the interior space 01 of the outermost tube 0;
- Fig. 3: shows the interior space 11 of the innermost tube 1 being filled with one sort of glass particles 101 and the remaining annular space 01 between the innermost tube 1 and the outermost tube 2 being filled with another sort of glass particles 100, while being exposed to a vibration and/or to a temperature below the melting point of the glass particles 100, 101;
- Fig. 4: shows the removal of the innermost tube 1 that may be made of glass, plastic, carbon or metal; leaving the glass particles 100, 101 bordering against one another;
- Fig. 5: shows the preform 9 of figure 4 after the removal of the innermost tube 1, while being lowered into a furnace 83;
- Fig. 6: shows the preform 9 of figure 4 without removal of the innermost tube 1, while being lowered into a furnace 83;
- Fig. 7: shows an innermost tube 1 and two intermediate tubes 2, X located within an outermost tube 0, with the interior space 11 of the innermost tube 1 and the spaces 12, 2X, X0 delimited by the outermost tube 0, the intermediate tubes 2, X and the innermost tube 1 being partially filled with different sorts of glass particles 100, 101, 102, 10n, that are selected according to a desired profile P1, P2;
- Fig. 8: shows an innermost tube 1 and three intermediate tubes 2, 3, X located within an outermost tube 0, with the interior space 11 of the innermost tube 1 and the spaces 12, 23, 3X, X0 delimited by the intermediate tubes 2, 3, X being further partitioned;
- Fig. 9: shows a solid primary or secondary preform 10 placed axially aligned within the interior space 11 of the innermost tube 1 that is placed within an outermost tube 0, with the remaining interior space 11 of the innermost tube 1 being filled with one sort of glass particles 101 and the remaining annular space 01 between the innermost tube 1 and the outermost tube 2 being filled with another sort of glass particles 100;
- Fig. 10: shows an apparatus 8 used for drawing an optical fiber 90 from an inventive secondary preform 9; and
- Fig. 11: shows a preform 9 designed for fabricating Photonic Crystal Fibers.

### DETAILED DESCRIPTION OF THE PREFERRED EMBODIMENTS

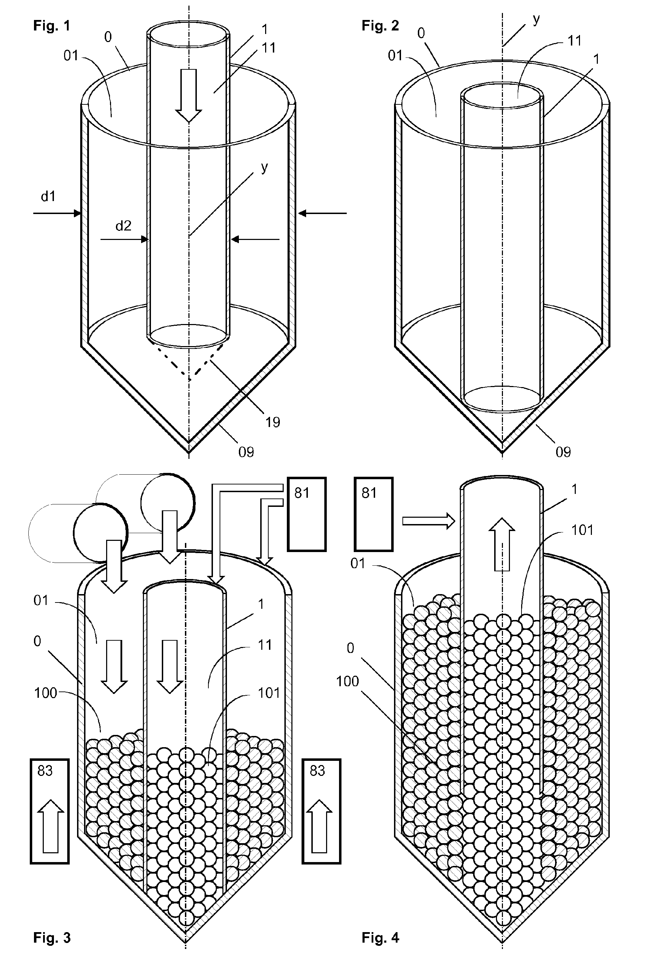

Figure 1 shows the insertion of an innermost tube 1 having an interior space 11 into an outermost tube 0 having a primary axis x, an interior space 01 and a conical closure 09 at its lower end. The outermost tube is typically a thin walled silica tube. Since grinding procedures may be applied to remove the outermost tube 0 after the preform has been fused, it is possible to apply other materials.

The innermost tube 1, which may also comprise a closure 19 at its lower end, may be made of any suitable glass material as detailed below. In the event that the innermost tube 1 is removed before the assembled preform is fused, then it may be preferable to use an innermost tube 1 made of other material than glass that exhibits preferred mechanical properties. An innermost tube 1 made of metal can for example have a smaller wall-diameter without risking damaging the tube while handling, i.e. inserting, filling or removing.

Figure 2 shows the tube 11 of figure 1 placed coaxially aligned in the interior space 01 of the outermost tube 0.

Figure 3 shows the interior space 11 of the innermost tube 1 being filled with one sort of glass particles 101 and the remaining annular space 01 between the innermost tube 1 and the outermost tube 2 being filled with another sort of glass particles 100.

In order to obtain an even distribution of the inserted glass particles 100, 101 a mechanical vibration is preferably applied to the outermost tube 0 and/or to the innermost tube 1. This vibration may be applied by a device 81, which is holding the assembled tubes 0, 1. The frequency of the vibration is preferably adapted to the size of the glass particles 100, 101 and is preferably inverse proportional to their size.

Alternatively or in addition a thermal treatment of the glass particles 100, 101 may be applied during the filling procedure. For that purpose a furnace 83, which is used for fusing the assembled preform, is following the fill level and applies an intermediate process temperature that is lower than the melting point of the innermost and intermediate glass particles 100, 101.

Preferably the intermediate temperature is selected in such a way that the thermal treatment causes the glass particles to change from a first state to a second state, in which the glass particles take on a lower material density, i.e. a larger volume. For this purpose the intermediate process temperature is preferably selected in the range between approximately 576°C and 1470°C. It has been noted, that the density of the glass particles will not significantly increase after completion of the filling procedure and cooling down. Hence, during the later fusing process, when the glass particles 100, 101 are again heated, a rupture of the glass tubes is avoided, that otherwise could occur due to the expansion of the glass particles 100, 101 before melting.

In the event that the glass particles consist of trigonal α-Quartz having a material density of approx. 2,65 g/cm3, then preferably the intermediate process temperature is selected between 576°C and 870°C so that α-Quartz is transformed into hexagonal β-Quartz having a material density of approx. 2,53 g/cm3.

In the event that the glass particles consist of α-Quartz or β-Quartz, then preferably the intermediate process temperature is selected between 870°C and 1470°C so that α-Quartz or β-Quartz is transformed into hexagonal β-Tridymite having a material density of approx. 2,25 g/cm3.

Still further, an intermediate process temperature above 1470°C can be applied to transform glass particles and with an initial configuration of α-Quartz, β-Quartz or β-Tridymite into β-Cristobalite having a material density of approx. 2,20 g/cm3.

Figure 4 shows the removal of the innermost tube 1 that, in the event that it is immovable, may be made of glass, plastic, carbon or metal, leaving the innermost glass particles 100 and the intermediate glass particles 101 bordering against one another.

This preliminary heating process is preferably applied while simultaneously removing the removable tubes, i.e. the innermost tube 1 in the given example.

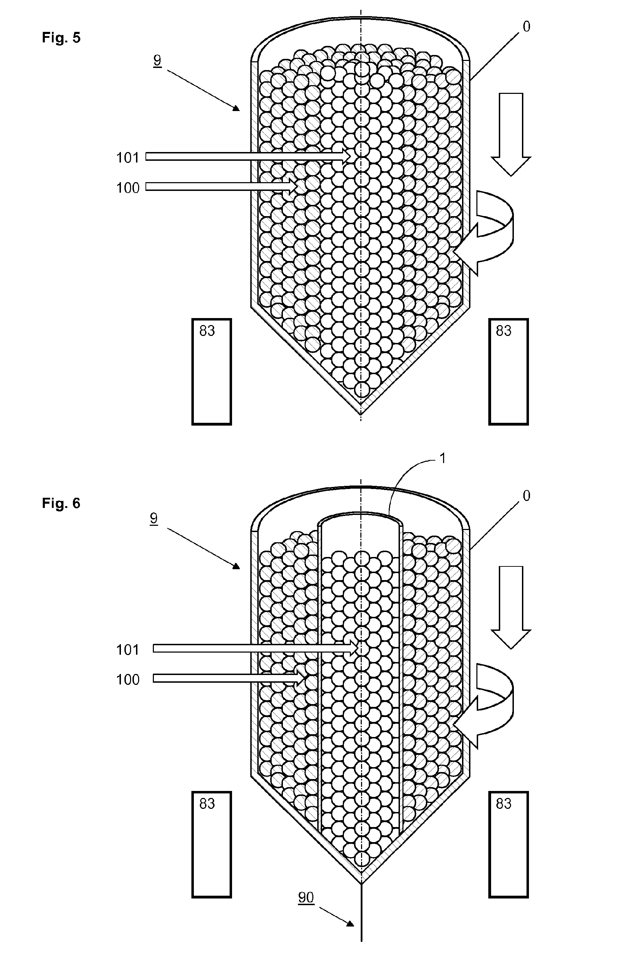

Figure 5 shows the preform 9 of figure 4 after the complete removal of the innermost tube 1, while being lowered into a furnace 83.

The furnace 83 is used for performing an intermediate or the final thermal processing of the preform 9 that yields a processed preform with molten glass particles 100, 101. The processed preform 9 may then be removed for drawing an optical fiber 90 at another site.

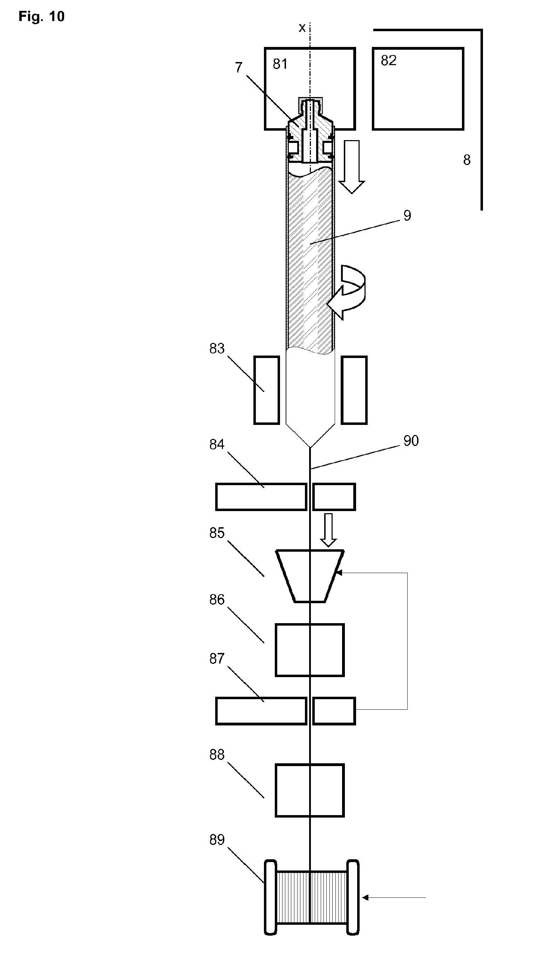

However, in a further preferred embodiment the glass particles 100, 101 and the applied tubes 0, 1 can be fused while simultaneously drawing an optical fiber 90 with an apparatus 8 as shown in figure 10. Before this process stage is executed, the outermost tube 0 is preferably sealed and evacuated, e.g. by means of the vacuum pump 82 shown in figure 10. In figures 1-9 the inventive secondary preforms 9 are therefore shown only principally without the armature that is shown in figure 10.

It can be seen from figure 4 that the first and the second sort of glass particles 100, 101 form now a unity that however has a specific optical profile. It is important to note, that this profile not only relates to the refractive index but also to further properties of the applied materials.

The innermost glass particles can consist or be made of SiO2-, Al2O3- or CaF2-material as outlined above. Using Al2O3- or CaF2-material provides preferred properties of the optical fibers with linear transmission ranges of up to approx. 7800nm.

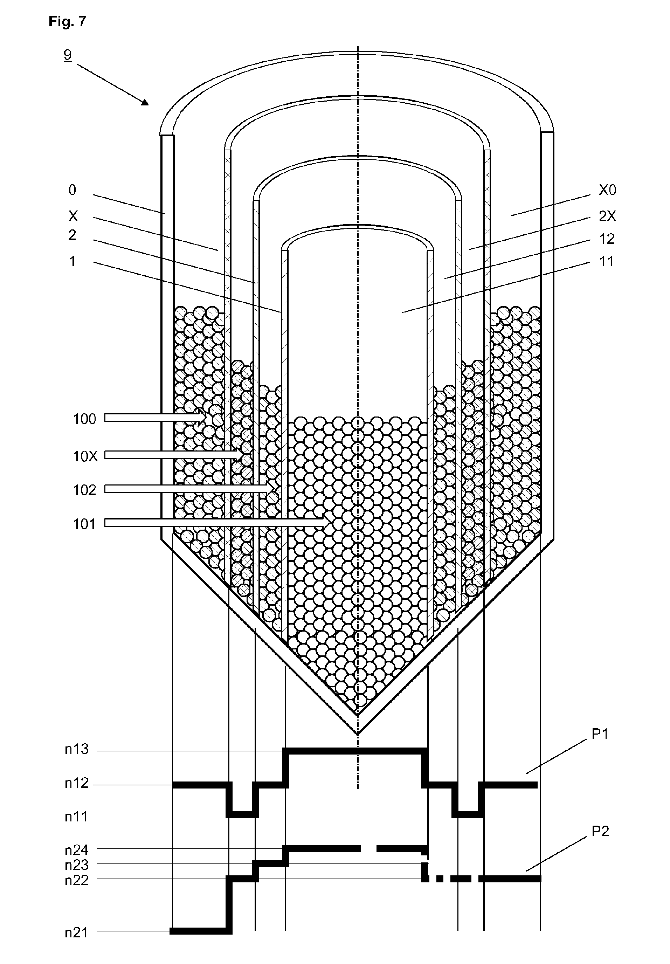

Figure 6 schematically shows processing of the preform 9 in a furnace 83 while simultaneously drawing an optical fiber 90 without having removed the innermost tube 1 from the preform 9. Leaving the innermost tube 1, or any intermediate tube mentioned below, in the preform 9 may have the following advantages. On the one hand, the innermost tube 1, or any intermediate tube, may be made of a suitable material, such as SiO2-, Al2O3- or CaF2, or Borosilicate having desired properties. Leaving the innermost tube 1, or any intermediate tube, within the preform 9 may therefore ameliorate the performance of the optical fibers 90 drawn therefrom. Further, it may even be desirable to leave the innermost tube 1, or any intermediate tube, inside the preform structure 9 in order to separate the different sorts of glass particles 100, 101. In this respect, the material of the innermost tube 1, or any intermediate tube, may correspond to the material of one sort of the glass particles 100 or 101. Alternatively the innermost tube 1, or any intermediate tube, are selected to serve as adaptation layer with properties that are compatible with both sorts of glass particles 100, 101 provided on the one and on the other side of the related tube 1, which themselves might not properly interact. In the event that the innermost glass particles 101 are made of Al2O3- or CaF2 and the intermediate glass particles 100 made of SiO2-material, then it would be recommended to use and innermost tube 1 made of borosilicate. In place of an adaptation layer resulting from the innermost tube 1 it might be preferable to use an adaptation layer made of borosilicate particles that are placed between the innermost tube 1 and a neighbouring intermediate tube 2 in a preform architecture as shown in figure 7.

Figure 7 shows an innermost tube 1 and two intermediate tubes 2, X located within an outermost tube 0. The interior space 11 of the innermost tube 1 and the spaces 12, 2X, X0 delimited by the outermost tube 0, the intermediate tubes 2, X and the innermost tube 1 are partially filled with different sorts of glass particles 100, 101, 102, 10n, that are selected according to a desired profile P1 or P2.

It is shown, that the symmetrical profile P1 is stepped between three levels n1, n2 and n3 of the refractive index.

The innermost glass particles 101, e.g. SiO2-, Al2O3- or CaF2 particles, are selected to provide a core with a high refractive index n3.

The intermediate glass particles 100, 102 that are located in annular spaces 12, X0 adjacent to the innermost tube 1 and the outermost tube 0 are selected to provide peripheral cladding layers, each having a reduced refractive index n2.

The intermediate glass particles 10n located in an annular space 2X between the annular spaces 12 and X0 are selected to provide an intermediate cladding layer which has a further reduced refractive index n1. In order to obtain this low refractive index, the intermediate glass particles 10X comprise a lower density and/or that are doped accordingly, preferably with fluorine.

The intermediate cladding layer, which has a very low refractive index, serves as a second barrier for reflecting optical signals towards the core of the optical fiber. Hence, the ratio of the indices of refraction n1/n2 is selected in such a way that a total reflection of light occurs, that travels within the first cladding layer.

The second profile P2 shown in figure 7 relates to manufacturing a graded index optical fiber with parts of the core closer to the fiber axis having a higher refractive index than the parts near the cladding. The advantage of the graded-index fiber compared to multimode stepped index fibers is a decrease in modal dispersion. In this embodiment the annular spaces 12, 2X adjacent to the first intermediate tube 2 relate therefore to the core region of the optical fiber.

As further shown in figure 7 the second profile P2 can also be asymmetrical. This is avoided in the prior art in order to avoid impairment of the optical signal, confined in the core of the optical fiber. However, according to the present invention an asymmetry of the profile is provided in such a way that optical signals propagating in the core are not disturbed while a special benefit is achieved, namely practically free access of laser radiation through the cladding into the core. With laser radiation entering the core that is doped with laser active materials, such as rare earth materials, optical signals propagating within the core are amplified. Preferably at least one of the following RE-oxides, preferably O₃ compounds, of Neodymium, Europium, Dysprosium, Holmium, Erbium, Thulium, is applied as dopant.

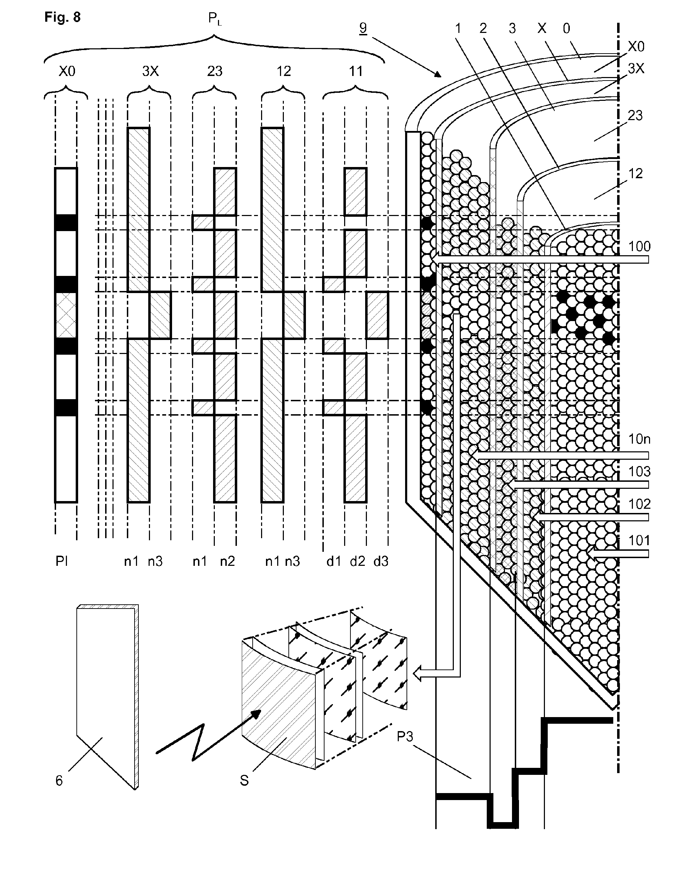

In order to provide access for laser radiation, at least one segment S of the secondary preform 9 and the optical fiber 90 is provided with a profile that is designed accordingly. The segment may comprise elements of the cladding layer that have an elevated refractive index allowing laser radiation that arrives in a certain angle to travel through the cladding into the core without or reduced reflection. The aperture of the segment S at the entrance of the core is however kept so small that the optical signals propagating in the core can not escape. The opening angle of the sector S is preferably selected in the range of 5° - 15°; 15°-25° or higher. Such sectors S may also be provided in higher number, preferably being equally distributed around the circumference of the preform 9. Assembling a preform 9 with such a sector 9 is described below with a reference to figure 8.

Figure 8 shows the architecture of an assembled secondary preform with an innermost tube 1 and three intermediate tubes 2, 3, X located within an outermost tube 0. The interior space 11 of the innermost tube 1 and the spaces 12, 23, 3X, X0 delimited by said tubes 0, 1, 2, 3, X are further partitioned in order to obtain specific longitudinal profile P_{L}. Hence, along the preform 9 there are sections with different symmetrical or asymmetrical profiles with sectors in which the profiles deviate as desired. The profiles may differ in view of the applied materials, with regard to dimension or composition, or dopants. The core region of the secondary preform may for example be doped with calcium or germanium d1 or rare earth materials d2 or combinations thereof d3 in order to achieve a desired refractive index n and/or laser activity. The refractive indices of the cladding layers vary between three values n1, n2 and n3 in the given example, which are combined differently. However, more complex architectures can still be realised.

It is shown that the sector S comprises a rare earth dopant d3 in the core region. The corresponding cladding regions comprise elevated indices of refraction n3, n2 and n3 facilitating the transmission of the laser radiation.

In order to partition the sub-spaces sectorally separation elements 6 may be inserted, preferably radially, into the annular space. The separation elements 6 are preferably selected according to the glass particles provided in the related sub-spaces, but may also be removed.

In order to partition the sub-spaces longitudinally a separation element, such as a circle ring, may horizontally be inserted. Alternatively the sorts of glass particles may simply be altered as desired at defined fill levels, preferably after having achieved a plain level over the complete cross-section.

In this embodiment of the secondary preform 9 the different profiles are indicated by specific glass particles 100 that are filled in the outermost annular space X0 and that are marked differently for each section. The marking can be performed in any convenient manner, which allows detection during the drawing procedure. The glass particles can be coloured or doped with metal that would influence a magnetic field, thus allowing the detection by measuring flux changes.

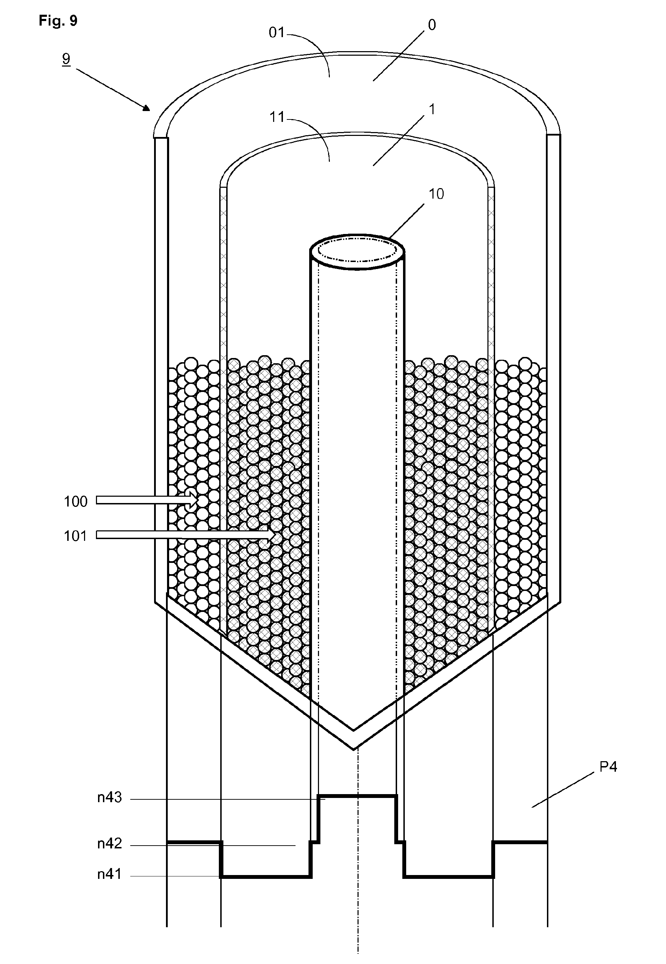

Figure 9 shows a secondary preform during the fill procedure with a solid secondary preform 10 placed axially aligned within the interior space 11 of the innermost tube 1. The remaining interior space 11 of the innermost tube 1, i.e. a further annular space, is partially filled with one sort of glass particles 101 and the annular space 01 between the innermost tube 1 and the outermost tube 2 is partially filled with another sort of glass particles 100. It is shown that the secondary preform 10 comprises a thin cladding layer with the same refractive index n42 as the glass particles 100 in the outermost annular space 01. The glass particles 101 placed within the innermost tube 1 comprise a reduced refraction index n41 preventing the optical signals from escaping from the core of the optical fiber 90 drawn from this preform 9. Hence, the inventive solution allows combining solid preforms with two and more sorts of glass particles in order to create various architectures of the preform. Of course, the solid secondary preform 10 is preferably made by using the inventive method as well.

Figure 10 shows an apparatus 8 used for drawing an optical fiber 90 from inventive secondary preforms 9.

The secondary preform 9 is mounted in a holding device 81, which allows controlled vertical movement along and preferably rotation around its axis x. Furthermore the holding device 81 may be designed to apply a vibration onto the secondary preform 9 as described above.

The apparatus may also be used for filling purposes, e.g. for filling and performing the preliminary heating of the glass particles 100, 101, ..., during the fill procedure. Further the apparatus may be used to pre-process the preform 9. I.e. to fuse the glass particles 100, 101, ..., and the tubes 0, 1, 2, 3 ... without drawing and optical fiber 90.

For drawing an optical fiber 90, the assembled secondary preform 9 is evacuated and sealed. Before that step, gases may be run through the secondary preform 9 for cleaning purposes or for adding further dopants.

After all of the above mentioned preparations have been completed, the secondary preform 9 is heated to its melting point and an optical fiber 90 is drawn from an angular area called the neck-down located at the lower end of the preform 9. A single optical fiber 90 emerges from the secondary preform 9 in a semi-molten state and passes through a diameter monitor 84. The optical fiber 90 continues to be pulled downward and passes through a coating applicator 85 that applies a coating to protect and preferably visually mark the optical fiber 90.

As outlined above, the diameter monitor 84, in a preferred embodiment, may also monitor the marker provided in the outermost cladding region. Either an optical signal may be detected. Alternatively the fiber may be run through a coil or two coils inductively coupled with one another and will alter the magnetic field induced therein, depending on the applied metal dopants. Hence, the related marker can easily be detected by measuring the voltage induced in one of the coils.

Based on the marker that has been detected, the corresponding signal is forwarded to the coating applicator 85 (see the arrow), which selects the corresponding coating that may have a specific colour. In the event that the secondary preform 9 has different profiles in three different sections, the inventive apparatus 8 will automatically detect the profile of the drawn optical fiber 90 and will apply the related coating. The user will then exactly know what kind of optical fiber 90 has been purchased or installed. In the event that corrective maintenance must be performed, the specific coating may be extremely helpful.

The optical fiber 90 also passes through other units 86, 87 that cure the optical coating and monitor the overall diameter after the coating has been applied. The optical fiber 90 then encounters a spinning apparatus 88 which may comprise a roller that imparts a spin into the optical fiber. The optical fiber 90 then eventually encounters a series of rollers (not shown) pulling the optical fiber before it is wrapped around a drum or spool 89.

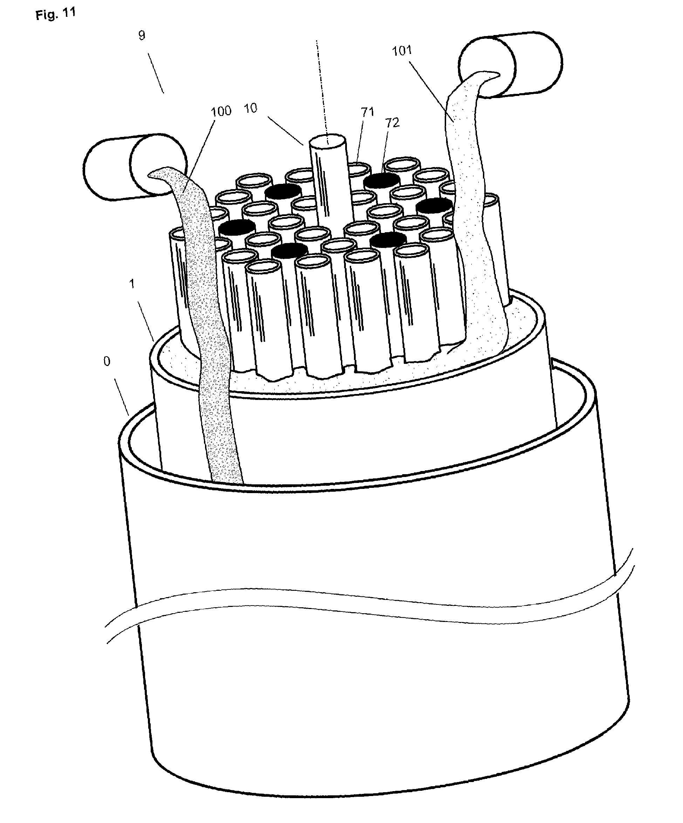

Figure 11 shows a preform 9 designed for fabricating Photonic Crystal Fibers. As mentioned above the inventive method allows creating preforms for Photonic Crystal Fibres in different ways.

In the example shown in figure 11 a solid preform 10 has been placed within the innermost tube 1 forming the core of the Photonic Crystal Fiber. In addition auxiliary tubes were placed as well within the innermost tube 1 in a periodic structure. The innermost tube 1 and the outermost tube 0 are then filled with innermost and outermost glass particles 101, 100. If desired, intermediate tubes can be applied as a well in order to create further layers.

### REFERENCES:

[1] Mool C. Gupta, Handbook of PHOTONICS, CRC Press, 1997 Boca Raton, chapter 10.7, pages 445-449
[2] US 2007/214841 A1
[3] US2004156401A1
[4] WO2008068331A1
[5] WO2005102947A1

## Claims

1. Method for manufacturing a secondary preform (9) that is used for drawing an optical fiber (90) having a core and a cladding with different refractive indices, comprising the steps of
holding an outermost tube (0) with a closed lower end (09); inserting at least an innermost tube (1) coaxially aligned into the outermost tube (0);
selecting at least one sort of intermediate glass particles (100) and one sort of innermost glass particles (101) according to the profile determined for the secondary preform (9) or the optical fiber (90);
filling the annular space (01) between the neighbouring tubes (0, 1) with the intermediate glass particles (100);
filling the innermost tube (1) that is empty or comprises a solid preform (10) with the innermost glass particles (101);
performing a final thermal process including thermally processing at least the innermost glass particles (101), the intermediate glass particles (100) and the outermost tube (0) in order to obtain a fused secondary preform (9).

2. Method according to claim 1, comprising the steps of:
inserting at least one intermediate tube (2; 3; ...; X) coaxially aligned between the outermost tube (0) and the innermost tube (1) and filling each one of the annular spaces (01, 12, 23, X0) between two neighbouring tubes (1, 2; 2, X; X, 0) with a sort of intermediate glass particles (102, 10n, 100) that is individually selected according to the desired profile (P1, P2, P3, P4) of the secondary preform (9) or optical fiber (90).

3. Method according to claim 1 or 2, comprising the step of longitudinally or sectorally partitioning at least one of the annular spaces (01, 12, 23, X0) between neighbouring tubes (1, 2; 2, 3; 3, X; X, 0) and/or the interior space (11) of the innermost tube (1) into separate sub-spaces that are filled with specific sorts of glass particles (1011; 10n1) that are selected according to the desired profile (P1, P2, P3, P4) of the secondary preform (9) or optical fiber (90).

4. Method according to claim 3, comprising the step of radially aligning the separate sub-spaces that are arranged within a sector of the secondary preform (9) whose arc length is selected such that laser radiation may enter the core of a fabricated optical fiber (90) through that sector while optical signals propagating through the core of the fabricated optical fiber (90) can not escape through that sector.

5. Method according to one of the claims 1 - 4, comprising the steps of selecting for the core region of the preform (9) and the manufactured optical fiber (90) innermost glass particles (101) made of silica, crystal, sapphire, fluoride glass, or chalcogenides and/or selecting for at least one cladding region of the preform (9) or the manufactured optical fiber (90) intermediate glass particles (102, 103, 10n, 100) that are made of SiO2-material.

6. Method according to one of the claims 1 - 5, comprising the steps of providing intermediate glass particles (102) in the annular space (12) between the innermost tube (1) and the first intermediate tube (2) having a coefficient of thermal expansion that lies between the coefficients of thermal expansion of the neighbouring glass particles (101, 103) or
using an innermost tube (1) and that is made of material, such as Borosilicate, having a coefficient of thermal expansion that lies between the coefficients of thermal expansion of the neighbouring glass particles (101, 102).

7. Method according to one of the claims 1 - 6, comprising the steps of selecting the innermost glass particles (101), if used as cladding material, and the different sorts of intermediate glass particles (102,; 103; 104; 100) in such a way
a) that two cladding layers with a higher refractive index are separated by a cladding layer with a lower refractive index or
b) that one cladding layer with a lower refractive index is embedded between the core and an outer layer with a higher refractive index.

8. Method according to one of the claims 1 - 7, comprising the steps of applying at least in one of the annular spaces (01, 12, 23, X0) intermediate glass particles (102,; 103; 104; 100) are used that comprise a relatively low density and/or that are doped with fluorine, thus having a reduced refractive index.

9. Method according to one of the claims 1 - 8, comprising the steps of inserting a solid preform (10) into the innermost tube (1), which solid preform (10) comprises a core only or a core and one cladding layer and/or inserting a plurality of removable or non-removable auxiliary tubes (71, 72) in an at least substantially periodic structure into the innermost tube (1) or into at least one of the annular spaces (12, 23, ...).

10. Method according to one of the claims 1 - 9, comprising the steps of inserting adjacent to the outermost tube (0) outermost glass particles (100) that contain a marker and detecting said marker while the optical fiber (90) is drawn and coating the optical fiber (90) with a coating that corresponds to the detected marker.

11. Method according to one of the claims 1 - 10, comprising the steps of sequentially or simultaneously inserting the innermost glass particles (101) and the intermediate glass particles (100, 102, ...) and/or performing a preliminary thermal process with applying an intermediate process temperature that is lower than the melting point of the innermost and intermediate glass particles (100, 101, 102).

12. Method according to one of the claims 1 - 11, comprising the steps of removing at least one of the innermost tube (1) and the intermediate tubes (2; 3; ...; X), while preferably applying a vibration, such as a subsonic vibration, to the removable tube (1; 2; 3; ...; X).

13. Method according to one of the claims 1 - 12, comprising the steps of using innermost and intermediate glass particles (100, 101, 102, ...) with a size of a fraction of one or a dozen of microns, wherein the innermost glass particles (101) are preferably doped with rare earth elements allowing attenuation or amplification of optical signals.

14. Method according to one of the claims 1 - 12, comprising the steps of selecting at least one of the outermost, the intermediate and the innermost tubes (0, 1, 2, ..., X) made of silica, crystal, sapphire, fluoride glass, or chalcogenides or selecting at least one removable intermediate or innermost tube (1, 2, ..., X) made of plastic, carbon or metal.

15. Preform (9) fabricated according to the method as defined in one of the claims 1 -14.

16. Optical fiber (90), such as a Photonic Crystal Fiber, drawn from a preform (9) as defined in claim 15.
